# FASCICULE DE BREVET EUROPEEN

(11) **EP 0 686 104 B1**
(45) Date de publication et mention de la délivrance du brevet: **20.05.1998**
(21) Numéro de dépôt: 94906812.6
(22) Date de dépôt: 18.02.1994
(51) Int. Cl.: B60S 1/34, F16F 1/06

(54) **RESSORT POUR BRAS D'ESSUIE-GLACE**
ANPRESSFEDER FÜR EINEN SCHEIBENWISCHERARM
WIPER ARM SPRING

(30) Priorité: 01.03.1993 US 24467
(43) Date de publication de la demande: 13.12.1995
(73) Titulaire: KOCH INNOVATIONS INC., Brossard, Quebec, J4Y 2R4 (CA)
(72) Inventeur: Koch, Jean, Montréal, Québec J4W 2H9 (CA)
(74) Mandataire: Bonnetat, Christian
(86) Numéro de dépôt international: CA9400086
(87) Numéro de publication internationale: WO9420337

(56) Documents cités:
- GB-A- 249 136
- GB-A- 2 189 984
- US-A- 2 602 950
- US-A- 2 885 710

## Description

### DOMAINE DE L'INVENTION

Cette invention a trait à des bras d'essuie-glace de véhicules, et plus particulièrement à un ressort pour un bras d'essuie-glace.

### ÉTAT DE LA TECHNIQUE

Le bras d'essuie-glace de véhicules comporte déjà certains moyens pour maintenir une certaine pression de la lame de caoutchouc contre le pare-brise. Habituellement, le bras d'essuie-glace ne repose pas très haut sur le pare-brise et le ressort de tension hélicoïdale qui est étiré entre une base fixée à un arbre cannelé d'entraînement et un bras pivotant d'essuie-glace, ne dégage pas suffisamment d'espace pour libérer un moment de bras assez long pour ainsi créer une pression suffisante sur la lame, par rapport à la force exercée par le ressort, puisqu'il fonctionne en tension avec un court levier. Néanmoins, le ressort doit être extrêmement puissant par rapport à la force du bras et du pivot afin de créer un moment suffisamment important pour générer une bonne pression sur la lame de sorte qu'à son tour, le balai d'essuie-glace produise une action d'essuyage satisfaisante sur le pare-brise.

De plus, comme il arrive habituellement à vitesse élevée du véhicule ou lorsque le véhicule fait face à des vents forts, l'effet de soulèvement induit par le vent sur le bras et le balai contrebalance la force exercée par le ressort et réduit ainsi l'action d'essuyage du balai.

Il est donc désirable de prévoir un ressort additionnel qui s'installe sur les bras d'essuie-glace afin d'accroître la pression d'essuyage contre le pare-brise.

Le brevet américain US-A-2,885,710 délivré en 1959 décrit un tel ressort additionnel. La réalisation illustrée à la figure 4 de ce brevet US-A-2,885,710 montre une tige élastique 10 dont les extrémités 6,8 forment des crochets en U qui s'engagent sur la tête d'entraînement et le bras de soutien 2 de l'essuie-glace, les deux crochets étant reliés par une portion spiralée intermédiaire 12 qui est éloignée de chacun des deux crochets. Le ressort selon ce brevet possède les désavantages suivants :
a) La portion spiralée 12 est éloignée du crochet intérieur 6 et donc la partie de la tige 10 qui raccorde la portion spiralée 12 au bras inférieur 6c du crochet intérieur 6 forme un bras de levier qui exerce une torsion sur le bras inférieur 6c susceptible de causer le bris de ce dernier.
b) La portion spiralée 12 n'a qu'une seule spire et donc l'utilisateur doit enlever le ressort avant de soulever le bras de soutien pour nettoyer ou remplacer la lame de l'essuie-glace, car le ressort serait susceptible de dépasser sa limite élastique en supposant qu'il soit assez fort pour exercer sur l'essuie-glace la pression additionnelle voulue.
c) La portion spiralée 12 fait saillie de la face de dessus de l'essuie-glace et donc fait obstruction avec le capot avant du véhicule, car normalement ce capot surplombe l'essuie-glace au repos.
d) Le crochet extérieur 8 n'engage pas le dessous du bras de soutien et est donc susceptible de se décrocher.

### BUT DE L'INVENTION

Le but de l'invention est donc de prévoir un ressort de contrainte amovible et additionnel destiné à augmenter la pression d'un essuie-glace contre le pare-brise d'une voiture et qui est formé de façon à éviter les inconvénients mentionnés ci-dessus.

Ce but est réalisé grâce à un ressort du type divulgué dans US-A-2,885,710 et tel qu'il est défini par la revendication 1. Des modes de réalisation de l'invention sont définis dans les revendications 2 à 5 dépendantes.

### COURTE DESCRIPTION DES FIGURES DES DESSINS

La figure 1 représente une vue en plan de dessus d'un bras d'essuie-glace relié à sa tête d'entraînement et du ressort de l'invention en position de ceux-ci;
La figure 2 est une vue latérale de l'agencement de la figure 1;
la figure 3 est une vue latérale opposée à celle de l'agencement de la figure 1, montrant, en traits pointillés, le ressort en position opérante de contrainte, et, en traits pleins, la portion non contrainte du ressort avant qu'il soit accroché au bras de soutien de l'essuie-glace; et
la figure 4 montre une vue en plan de dessus du ressort.

### DESCRIPTION DÉTAILLÉE DE LA RÉALISATION DE L'INVENTION

Le ressort selon l'invention consiste en une tige élastique réalisée en un matériau solide, à l'épreuve de l'eau tel que du plastique ou du métal. La tige est courbée de façon à inclure une portion intermédiaire spiralée 1, préférablement faisant quatre à cinq spires. Les deux extrémités de la tige définissent un crochet intérieur et un crochet extérieur, chacun en forme de U. Le crochet intérieur est constitué par un bras inférieur 8 et un bras supérieur 6, parallèles l'un à l'autre, et qui sont joints par une partie de base 10. Le crochet extérieur est constitué par un bras inférieur 7 et un bras supérieur 11 parallèles l'un à l'autre, lesquels sont joints par une partie de base 2. Les deux crochets s'ouvrent vers la portion spiralée 1 et tous les bras 6,8, et 7,11 sont parallèles les uns aux autres et généralement parallèles à l'axe de la portion spiralée 1. Le bras inférieur 8 du crochet intérieur fait saillie directement à partir de la spire intérieure de la section spiralée 1.

Un bras de raccord 12 relie la spire extérieure de la portion spiralée 1 au bras supérieur 11 du crochet extérieur. Les deux parties de base 2 et 10 sont généralement coplanaires. Le bras de raccord 12 est généralement tangent à et part de la spire extérieure de la portion spiralée 1 et est inclinée vers le plan contenant les parties de base 2 et 10.

Le ressort est destiné à être placé sur un essuie-glace conventionnel composé d'un bras de soutien 3 qui est pivoté en 9 à la tête d'entraînement 4 laquelle est installée sur un arbre cannelé d'entraînement conventionnel 5 afin de produire un mouvement d'essuyage d'une lame (non représentée) sur un pare-brise (non montré), cette lame de caoutchouc étant portée par un balai (non montré) situé à l'extrémité du bras de soutien 3.

Dans la position installée, la portion spiralée 1 se trouve sur un côté de la tête d'entraînement 4 et du bras de support 3, dans la région de l'axe de pivotement 9, l'axe de la portion spiralée étant généralement parallèle audit axe 9.

Les deux parties de base 10 et 2 passent sur les côtés de la tête d'entraînement 4 et du bras de soutien 3, qui sont opposés à la portion spiralée 1, alors que le bras inférieur 8 et le bras supérieur 6 du crochet intérieur passent transversalement à la tête d'entraînement 4 et sont appliqués contre le dessous et la face de dessus de la tête d'entraînement 4, respectivement.

De la même façon, le bras supérieur 11 et le bras inférieur 7 du crochet extérieur se prolongent transversalement au bras de soutien 3 et sont appliqués contre la face supérieure et le dessous respectivement du bras de soutien 3.

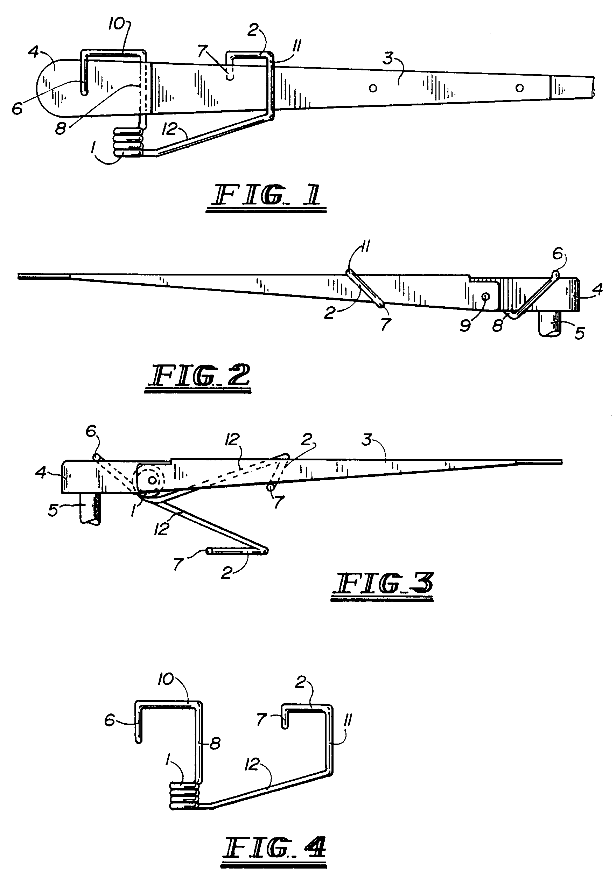

Tel qu'illustré aux figures 2 et 3, dans la position opérante de contrainte du ressort, la distance entre les deux bras supérieurs 6 et 11 est plus grande que la distance entre les bras inférieurs 8 et 7.

Parce que le bras inférieur 8 du crochet intérieur est parallèle à l'axe d'enroulement de la portion spiralée 1 et est directement relié à la spire intérieure, ce bras inférieur 8 n'est pas soumis à un effort de torsion et donc n'est pas sujet à briser.

Puisque le bras 7 du crochet extérieur passe sous le bras de soutien 3, le ressort demeure fermement accroché audit bras de soutien 3 même lorsque celui-ci est pivoté autour de l'axe 9 en s'éloignant du pare-brise, e.g. lors de son nettoyage.

Le fait que la portion 1 soit spiralée avec de nombreuses spires permet au bras de soutien de pivoter d'au moins 90 degrés par rapport à la tête d'entraînement 4, sans que le ressort n'atteigne sa limite élastique et ne brise. De même, les nombreuses spires de la portion spiralée 1 permettent de réaliser un ressort qui exerce une grande pression sur le bras de soutien.

Finalement, la portion spiralée 1, ne fait pas obstruction avec le capot du véhicule, car elle est disposée sur le côté du bras et dans la région de l'axe de pivotement 9.

## Revendications

1. Un ressort de contrainte amovible additionnel destiné à augmenter la pression d'un essuie-glace contre le pare-brise d'une voiture, ledit essuie-glace comportant une tête d'entraînement (4) et un bras de soutien (3) articulé sur la tête d'entraînement par un axe de pivotement (9) et ledit ressort étant constitué par une tige élastique allongée unique, comprenant à ses bouts un crochet en U intérieur (6,8,10) et un crochet en U extérieur (7,2,11) destiné à s'engager respectivement sur ladite tête d'entraînement (4) et sur ledit bras de soutien (3), ledits crochets intérieur et extérieur étant reliés par une portion spiralée intermédiaire (1) définissant un axe d'enroulement autour duquel l'un desdits crochets peut tourner en rotation forcée par rapport à l'autre desdits crochets, ledit crochet en U intérieur incluant un bras supérieur (6) et un bras inférieur (8) qui sont reliés entre eux par une partie de base (10) et qui sont appliqués respectivement contre la face de dessus et la face de dessous de la tête d'entraînement (4), ledit crochet en U extérieur incluant un bras supérieur (11) appliqué contre la face de dessus du bras de soutien (3), lesdit bras inférieur (8) et supérieur (6) dudit crochet intérieur (6,8,10) et ledit bras supérieur (11) dudit crochet extérieur (7,2,11) présentant une direction générale parallèle à celle dudit axe d'enroulement et ledit crochet extérieur (7,2,11) étant relié à une extrémité de ladite portion spiralée intermédiaire (1) par une première section de raccord (12) de direction générale transversale audit axe d'enroulement, caractérisé en ce que :
a) la portion spiralée intermédiaire (1) comprend quelques spires coaxiales définissant l'axe d'enroulement;
b) le bras inférieur 8 dudit crochet intérieur (6,8,10) forme une seconde section de raccord reliant directement, parallèlement à l'axe d'enroulement, ledit crochet intérieur à l'autre extrémité de ladite portion spiralée intermédiaire (1); et
c) ledit crochet extérieur (7,2,11) inclut un bras inférieur (7) et une partie de base (2) reliant entre eux le bras inférieur (7) et le bras supérieur (11) dudit crochet extérieur, le bras inférieur (7) étant appliqué contre le dessous du bras de soutien (3).

2. Ressort de contrainte selon la revendication 1, caractérisé en ce que les bras inférieurs (6 et 7) desdits crochets intérieur et extérieur(6,8,10 et 7,2,11) sont libres, sont parallèles l'un à l'autre et sont orientés dans la même direction générale.

3. Ressort de contrainte selon la revendication 2, caractérisé en ce que ledit bras inférieur libre (6) dudit crochet intérieur est plus long que le bras inférieur libre (7) dudit crochet extérieur.

4. Ressort de contrainte selon la revendication 2, caractérisé en ce que lesdites parties de base (10,2) des deux crochets en forme de U sont sensiblement coplanaires et orthogonales audit axe d'enroulement de ladite portion spiralée intermédiaire (1).

5. Ressort de contrainte selon la revendication 2, caractérisé en ce que ladite partie de base (2) dudit crochet extérieur en forme de U (7,2,11) définit un angle aigu avec le plan intersectant la section de raccord (8) et le bras supérieur (11) du crochet extérieur en forme de U (7,2,11).

## Claims

1. An additional removable tension spring destined to increase the pressure of a windshield wiper against the windshield panel of a car, said wiper comprising a driving head (4) and a support arm (3) hinged on the driving head by a pivotal axis (9) and said spring being made from an unitary elongated resilient shaft, comprising at its extremities an inner U-shaped hook (6, 8, 10) and an outer U-shaped hook (7, 2, 11) destined to respectively engage said driving head (4) and said support arm (3), said inner and outer hooks being interconnected by an intermediate coiled portion (1) defining a coiling axis around which one of said hooks can forcibly turn rotatively relative to the other one of said hooks, said inner U-shaped hook including an upper arm (6) and a lower arm (8) that are connected to each other by a base part (10) and that are respectively applied against the upper and the lower faces of the driving head (4), said outer U-shaped hook including an upper arm (11) applied against the upper face of the support arm (3), said lower arm (8) and upper arm (6) of said inner hook (6, 8, 10) and said upper arm (11) of said outer hook (7, 2, 11) having a general direction parallel to that of said coiling axis and said outer hook (7, 2, 11) being connected to an extremity of said intermediate coiled portion (1) by a first connecting section (12) having a general direction transversal to said coiling axis, characterized in that:
a) the intermediate coiled portion (1) comprises several coaxial convolutions defining the coiling axis;
b) the lower arm (8) of said inner hook (6, 8, 10) forms a second connecting section directly connecting, parallel to said coiling axis, said inner hook to the other extremity of said intermediate coiling portion (1); and
c) said outer hook (7, 2, 11) includes a lower arm (7) and a base part (2) interconnecting the lower arm (7) and the upper arm (11) of said outer hook, the lower arm (7) being applied against the underface of said support arm (3).

2. A tension spring as defined in claim 1, characterized in that the lower arms (6 and 7) of said inner and outer hooks (6, 8, 10 and 7, 2, 11) are free, are parallel to each other and are oriented in the same general direction.

3. A tension spring as defined in claim 2, characterized in that said lower free arm (6) of said inner hook is longer than the lower free arm (7) of said outer hook.

4. A tension spring as defined in claim 2, characterized in that said base parts (10, 2) of the two U-shaped hooks are substantially coplanar and orthogonal to said coiling axis of said intermediate coiling portion (1).

5. A tension spring as defined in claim 2, characterized in that said base part (2) of said outer U-shaped hook (7, 2, 11) defines an acute angle with the plane intersecting the connecting section (8) and the upper arm (11) of the outer U-shaped hook (7, 2, 11).

## Patentansprüche

1. Zusätzliche abnehmbare Anpreßfeder, die dafür vorgesehen ist, den Druck eines Scheibenwischers gegen die Windschutzscheibe eines Fahrzeugs zu erhöhen, wobei der Scheibenwischer einen Mitnahmekopf (4) und einen Haltearm (3) aufweist, der durch eine Schwenkachse (9) am Mitnahmekopf gelenkig angebracht ist, und wobei die Feder aus einem einzigen dünnen elastischen Stabelement besteht, das an seinen Enden einen inneren U-förmigen Haken (6, 8, 10) und einen äußeren U-förmigen Haken (7, 2, 11) umfaßt, der dafür vorgesehen ist, am Mitnahmekopf (4) bzw. am Haltearm (3) anzugreifen, wobei die inneren und äußeren Haken durch einen dazwischenliegenden, spiralgewickelten Abschnitt (1) verbunden sind, der eine Wicklungsachse definiert um die sich einer der Haken bei einer erzwungenen Drehbewegung in bezug auf den anderen Haken drehen kann, wobei der innere U-förmige Haken einen oberen Arm (6) und einen unteren Arm (8) umfaßt, die durch ein Basisteil (10) miteinander verbunden sind und die an der Oberseite bzw. der Unterseite des Mitnahmekopfes (4) anliegen, wobei der äußere U-förmige Haken einen oberen Arm (11) umfaßt, der an der Oberseite des Haltearms (3) anliegt, wobei der untere (8) und obere (6) Arm des inneren Hakens (6, 8, 10) und der obere Arm (11) des äußeren Hakens (7, 2, 11) eine Grundrichtung aufweisen, die parallel zu der der Wicklungsachse ist, und der äußere Haken (7, 2, 11) mit einem Ende des dazwischenliegenden, spiralgewickelten Abschnitts (1) mittels eines ersten Verbindungsabschnitts (12) mit einer Grundrichtung quer zur Wicklungsachse verbunden ist, dadurch gekennzeichnet, daß:
a) der dazwischenliegende, spiralgewickelte Abschnitt (1) einige koaxiale Windungen umfaßt, die die Wicklungsachse definieren;
b) der untere Arm (8) des inneren Hakens (6, 8, 10) einen zweiten Verbindungsabschnitt bildet, der den inneren Haken parallel zur Wicklungsachse direkt mit dem anderen Ende des dazwischenliegenden, spiralgewickelten Abschnitts (1) verbindet; und
c) der äußere Haken (7, 2, 11) einen unteren Arm (7) und ein Basisteil (2) umfaßt, das den unteren Arm (7) und den oberen Arm (11) des äußeren Hakens miteinander verbindet, wobei der untere Arm (7) an der Unterseite des Haltearms (3) anliegt.

2. Anpreßfeder nach Anspruch 1, dadurch gekennzeichnet, daß die unteren Arme (6 und 7) der inneren und äußeren Haken (6, 8, 10 und 7, 2, 11) frei und parallel zueinander sowie in derselben Grundrichtung orientiert sind.

3. Anpreßfeder nach Anspruch 2, dadurch gekennzeichnet, daß der freie untere Arm (6) des inneren Hakens länger als der freie untere Arm (7) des äußeren Hakens ist.

4. Anpreßfeder nach Anspruch 2, dadurch gekennzeichnet, daß die Basisteile (10, 2) der beiden U-förmigen Haken im wesentlichen in der gleichen Ebene liegen und zur Wicklungsachse des dazwischenliegenden, spiralgewickelten Abschnitts (1) orthogonal sind.

5. Anpreßfeder nach Anspruch 2, dadurch gekennzeichnet, daß das Basisteil (2) des U-förmigen äußeren Hakens (7, 2, 11) einen spitzen Winkel mit der Ebene definiert, in der der Verbindungsabschnitt (8) und der obere Arm (11) des U-förmigen äußeren Hakens (7, 2, 11) liegt.
